# EUROPEAN PATENT APPLICATION

(11) **EP 1 847 351 A1**
(43) Date of publication of application: **24.10.2007**
(21) Application number: 07007578.3
(22) Date of filing: 13.04.2007
(51) Int. Cl.: B23P 19/08

(54) **Improved device for fitting washers on a blank**

(30) Priority: 21.04.2006 IT MI20060801
(71) Applicant: S.M.A.R.T. S.R.L., 15057 Tortona AL (IT)
(72) Inventor: Ghezzi, Enrico, 15057 Tortona (Alessandria) (IT)
(74) Representative: Forattini, Amelia

(57) **Abstract**

An improved device (1) for fitting washers on a blank (3), comprising a means for feeding blanks (3) that are fed on a conveyor disk (4) associated with a rotating assembly, a washer feeder means adapted to place each washer at a cam (8) which is associated with the base of the device. The base is stationary. The diameter of the rotating assembly is over 500 mm and the cam (8) is elongated.

## Description

The present invention relates to an improved device for fitting washers on a blank.

The most widely used washer fitting device is the one provided with a rotating station in which the rivet is moved by means of a disk provided with slots whose depth is proportional to the diameter of the rivet.

Several manufacturers propose this in the same size, 200 mm in diameter, with small differences in the rivet guiding system.

This type of device has substantially two drawbacks.

A first drawback is constituted by the fact that the circular cam that lifts the washer along the rivet does not lift the washer by more than 18 mm, due to the longitudinal dimensions of the cam. This lifting is absolutely insufficient when the rivets are long.

Another drawback occurs if it is necessary to fit two washers, for example an elastic washer and a flat washer, where it is necessary to place in series two fitting units, with rather complex tuning and fixtures.

The aim of the present invention is to provide a device for fitting washers on a blank that overcomes the drawbacks of the cited prior art.

A particular object of the invention is to provide a fitting device that allows to fit two washers on the same rivet.

Another object of the invention is to provide a device that allows to lift the washer to be fitted by a significantly greater extent on the rivet.

Another object is to provide a fitting device that allows a considerable simplification of tuning and of the process.

This aim and these and other objects, which will become better apparent hereinafter, are achieved by an improved device for fitting washers on a blank, comprising a means for feeding blanks, that are fed on a conveyor disk associated with a rotating assembly, a washer feeder means adapted to place each washer at a cam which is associated with a base of the device, said base being stationary, characterized in that the diameter of the rotating assembly is over 500 mm and in that the cam is elongated.

Further characteristics and advantages of the invention will become better apparent from the following detailed description of preferred but not exclusive embodiments thereof, illustrated by way of non-limiting example in the accompanying drawings, wherein:
Figure 1 is a perspective view of the detail of the cam of the fitting device according to the invention;

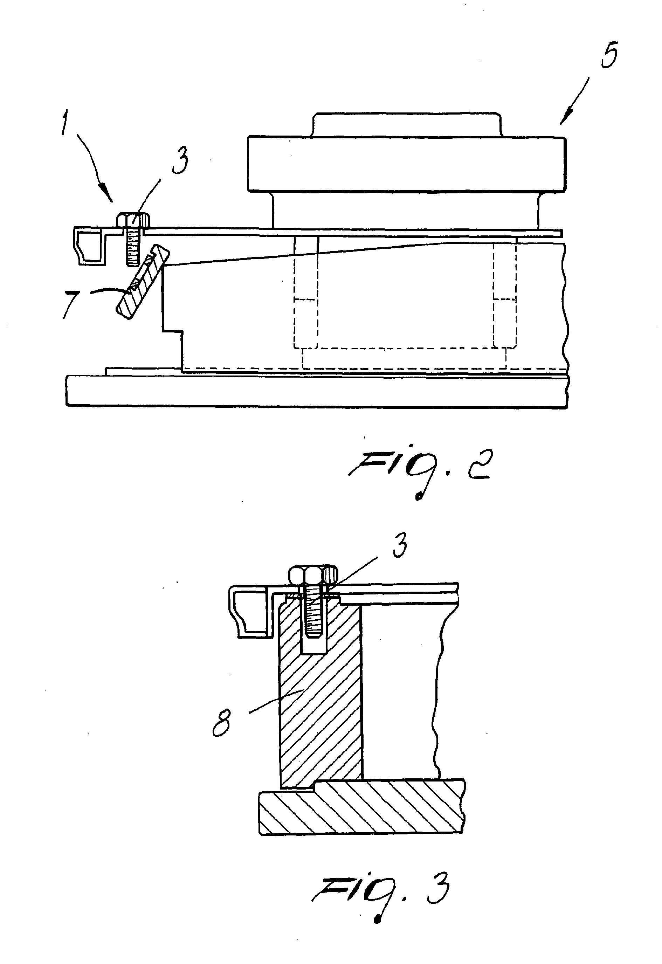

Figure 2 is an elevation view of the device according to the invention, illustrating an initial step of the fitting of a washer;

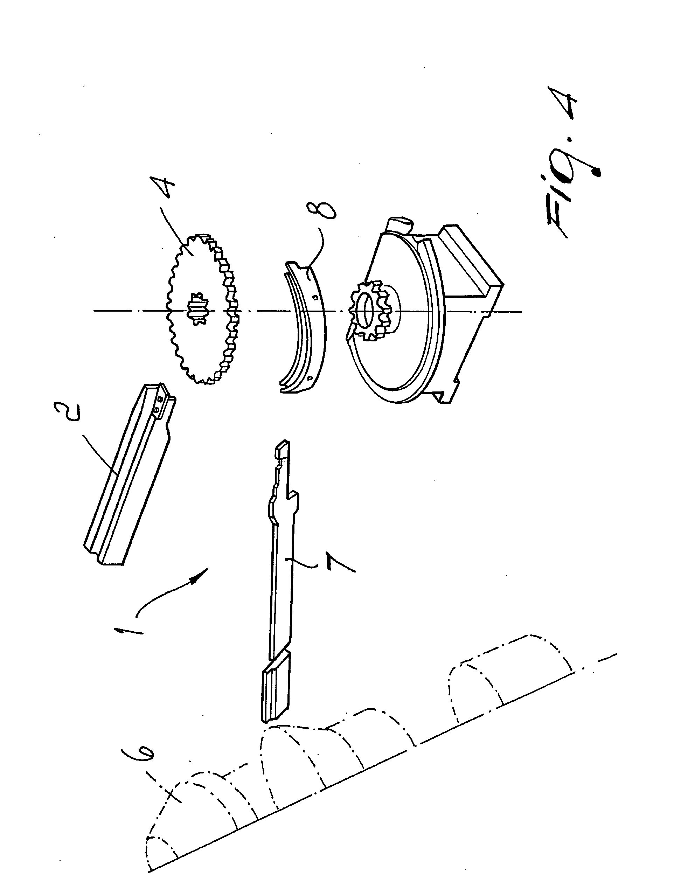

Figure 3 is a partial sectional view of the final step of the fitting of a washer;

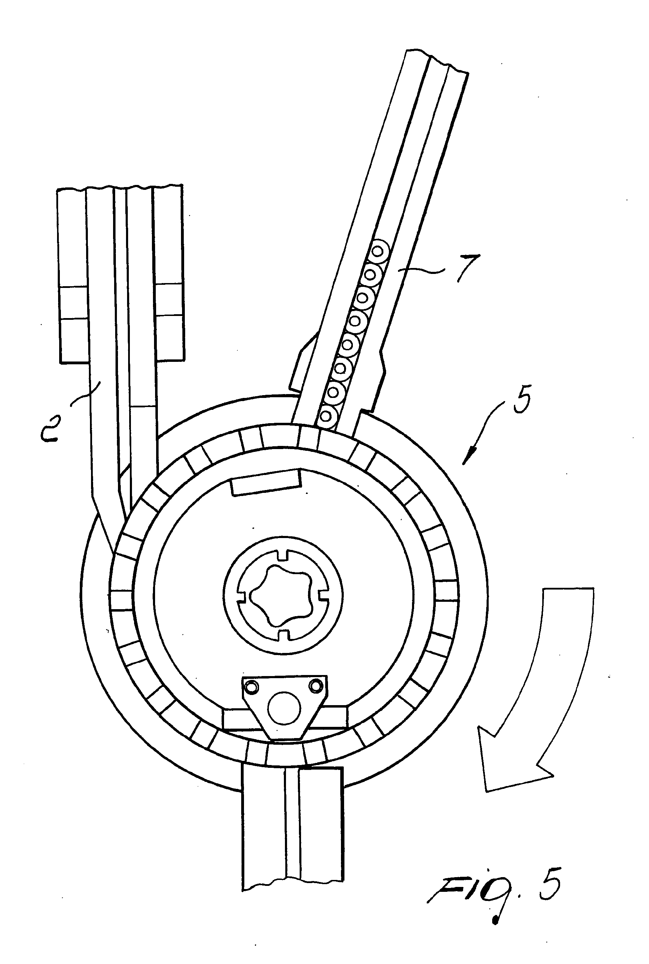

Figure 4 is a partial exploded view of the fitting device according to the invention;
Figure 5 is a plan view of the device, illustrating the insertion point of the blanks and of the washers.

With reference to the cited figures, a device according to the invention, generally designated by the reference numeral 1, includes a guide 2 for feeding blanks or rivets 3, which are fed on a conveyor disk 4 rigidly coupled to a rotating assembly 5.

The washers to be fitted are contained in one or more containers 6 and are fed to the system by means of a chute 7, which is suitable to arrange each washer at a cam 8 rigidly coupled to the base of the device, which is stationary.

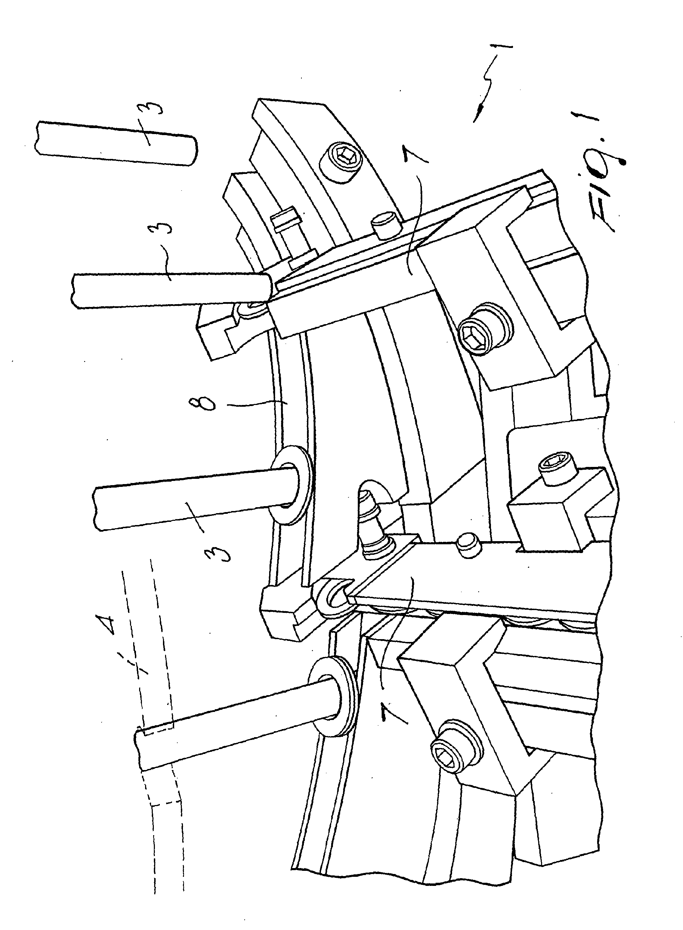

Figure 1 shows two chutes 7, each of which is suitable to feed a washer to the same rivet 3, so as to fit two washers on each rivet.

According to the present invention, the rotating assembly 5 has a substantially larger diameter than the conventional rotating devices of the prior art.

More particularly, the diameter of the rotating assembly 5 is approximately 509 mm, in contrast with a diameter of approximately 200 mm of the prior art devices.

According to the present invention, the rising cam 8 is substantially longer than the rising cams used in the devices of the prior art, and this allows to lift the washer to approximately 100 mm on the rivet.

Also, as shown by way of example in Figure 5, the direction of rotation of the rotating assembly is directed from the washer insertion point toward the blank insertion point, along the longest path, therefore in the opposite direction with respect to traditional assembly systems, which provide rivet entry just before the washer entry.

The assembly device according to the present invention is provided with a larger rotating assembly, rotates in the opposite direction with respect to conventional types, and benefits from a significantly longer rising cam.

These characteristics allow the washer to be lifted by approximately 100 mm on the rivet and, in view of the considerable availability of space, it is possible to assemble two washers on the same rivet.

This last characteristic is very important from a production standpoint, because it allows a considerable simplification of tuning and of the process.

In practice it has been found that the invention achieves the intended aim and objects, providing a device for fitting washers on a blank which is improved considerably with respect to the devices of the background art.

The device according to the present invention allows to lift the washer to be fitted up to a height of 100 mm, which is very useful for bolts of even 150-200 mm.

This application claims the priority of Italian Patent Application No. M12006A000801, filed on April 21, 2006, the subject matter of which is incorporated herein by reference.

## Claims

1. An improved device for fitting washers on a blank, comprising a means for feeding blanks that are fed on a conveyor disk associated with a rotating assembly, a washer feeder means adapted to place each washer at a cam which is associated with a base of the device, said base being stationary, **characterized in that** the diameter of said rotating assembly is over 500 mm and **in that** said cam is elongated.

2. The device according to claim 1, **characterized in that** the direction of rotation of said rotating assembly is directed from the insertion point of said washers toward the insertion point of said blanks, along the longest path.

3. The device according to claim 1 or 2, **characterized in that** said means for feeding said washers comprises at least two chutes or guides adapted to feed two types of washer, so as to fit two types of washer on each of said blanks.

4. The device according to one or more of the preceding claims, **characterized in that** the diameter of the rotating assembly is approximately 509 mm.

5. The device according to one or more of the preceding claims, **characterized in that** said cam allows to lift a washer up to approximately 100 mm on said blank.

6. The device according to one or more of the preceding claims, **characterized in that** said rotating assembly rotates in the opposite direction with respect to the prior art devices.
